# EUROPEAN PATENT SPECIFICATION

(11) **EP 2 067 889 B1**
(45) Date of publication and mention of the grant of the patent: **14.09.2011**
(21) Application number: 08170307.6
(22) Date of filing: 28.11.2008
(51) Int. Cl.: D04H 13/00, A41D 7/00, A41D 31/00, A47K 10/02, B32B 5/26

(54) **Bathroom textile article**
Badezimmertextilartikel
Article textile de salle de bain

(30) Priority: 05.12.2007 IT TO20070883
(43) Date of publication of application: 10.06.2009
(73) Proprietor: Mina, Emilio, 20133 Milano (IT)
(72) Inventor: Mina, Emilio, 20133 Milano (IT)
(74) Representative: Gallarotti, Franco

(56) References cited:
- EP-A2- 1 082 918
- WO-A1-00/78624
- US-A- 3 375 156
- US-A- 4 075 382
- US-A- 5 128 182
- US-A1- 2006 228 971

## Description

The present invention relates to bathroom textile articles.

Where not otherwise specified, in the present description and in the attached claims, the term "bathroom textile article" is meant to designate any textile article having the capacity of absorbing water and designed to be used by a person to dry his body or parts thereof after washing (for example, after washing his hands, or else after a bath or a shower) or to wipe moisture or sweat present on the skin (for example, following upon a sauna or a sports activity). In this context, consequently, the definition indicated is understood as comprising textile articles such as bathrobes, drying gloves, hand towels, towels, bath or beach towels and the like.

In addition, in the present description and in the attached claims, the use of the term "textile" is to be understood in its general meaning, i.e., not limited to articles produced starting from products obtained by weaving yam, but including, instead, also articles produced starting from products obtained by cohesion of fibres with glue or by adhesion of fibres, as is, for example, the case of non-woven fabrics.

The articles of the type referred to above are traditionally made of cloth or in textile toweling.

Bathroom articles made of cloth present the advantage of not being very voluminous, nor very cumbersome, and of being fairly inexpensive to produce. On the other hand, these articles prove far from comfortable for the user, on account of a relative roughness of the material of which they are made, and have above all a very limited capacity of absorption. For this reason, bathroom textile articles are, in the majority of cases, currently produced with toweling. Bathroom articles made of toweling are decidedly more comfortable to use than those made of cloth, thanks to their characteristics of softness, and are distinguished by a good capacity of absorption. On the other hand, articles made of toweling are relatively cumbersome and heavy: in general terms, the greater the absorbing capacity of the article made of toweling, the greater its weight and volume.

In order to solve the practical drawbacks deriving from the use of toweling, bathrobes have been proposed obtained by means of a layer of microfibre non-woven fabric.

EP 1 082 918 A2, upon which the preamble of claim 1 is based, discloses a bathrobes obtained by means of a layer of microfibre non-woven fabric.

US 3 375 156 A discloses a method for producing a high bulk laminated fabric, comprising applying heat during an embossing step. The method comprises providing at least two non-woven webs comprising synthetic polymer fibres, arranging the two non-woven webs in a superimposed relationship and then applying mechanical pressure to the webs, in a predetermined pattern of densified intersecting linear regions defining enclosed geometrical shapes, while simultaneously applying heat for fusing together the two webs along the above said intersecting linear regions. In this manner, a substantially quilt-like or puffed-like fabric is obtained.

The present invention basically proposes a further improvement, from the standpoint of comfort and versatility of use, of a bathroom textile article, particularly a bathrobe, having a structure comprising a microfibre non-woven fabric.

The above and other purposes still, which will emerge clearly in what follows, are achieved according to the present invention by a bathroom textile article, such as a bathrobe, a hand towel, a beach towel and the like, comprising a microfibre non-woven fabric, having the characteristics indicated in the claims.

The purposes, characteristics, and advantages of the invention will emerge clearly from the description, with reference to the drawing :
- Figure 1 is a schematic perspective view of a first bathroom textile article obtained according to the invention, particularly a bathrobe in a condition where it is being worn;
- Figure 2 is a partially exploded schematic view of a portion of the article of Figure 1;
- Figure 3 is a merely schematic cross section at an enlarged scale of a portion of the article of Figure 1, with two corresponding layers or parts in a respective first possible condition;
- Figure 4 is a cross section similar to the one of Figure 3, but with the two layers or parts made in a different way, in a respective first possible condition;
- Figure 5 is a cross section similar to the one of Figure 3, but with the two layers or parts in two other possible conditions;
- Figure 6 is a cross section similar to the one of Figure 4, but with the two layers or parts in two other possible conditions;
- Figure 7 is a schematic view in rear elevation of the article of Figure 1, in a first configuration of use;
- Figure 8 is a schematic cross section according to the line VIII-VIII of Figure 7;
- Figure 9 is a schematic cross section similar to the one of Figure 8, but with the article in a second configuration of use; and
- Figure 10 is a schematic perspective view of a second bathroom textile article obtained according to the invention, in particular a hand towel.

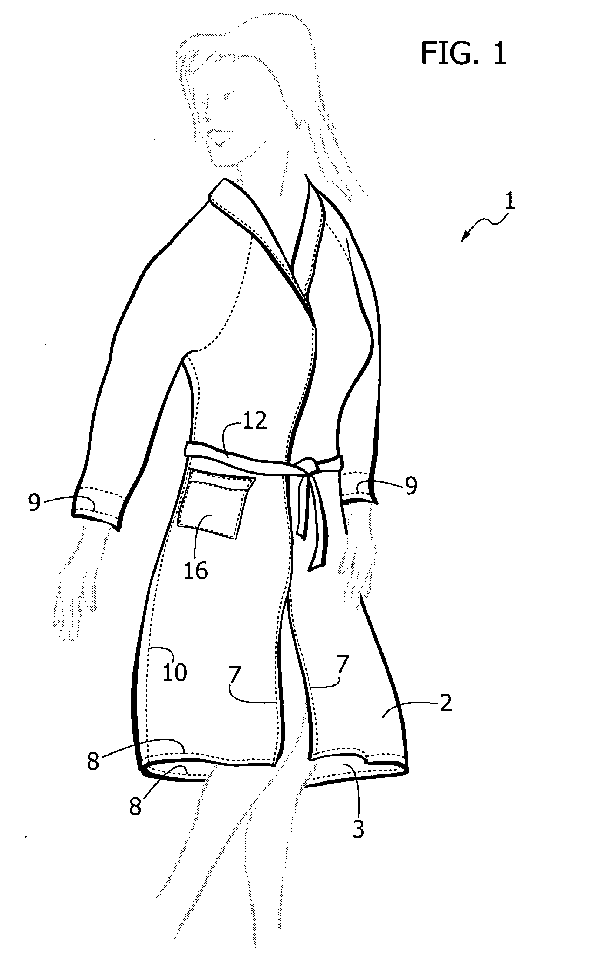

Represented in Figure 1 is a bathroom textile article obtained according to the present invention. In the example illustrated, the article is an article that can be worn and is constituted by a bathrobe, designated as a whole by 1.

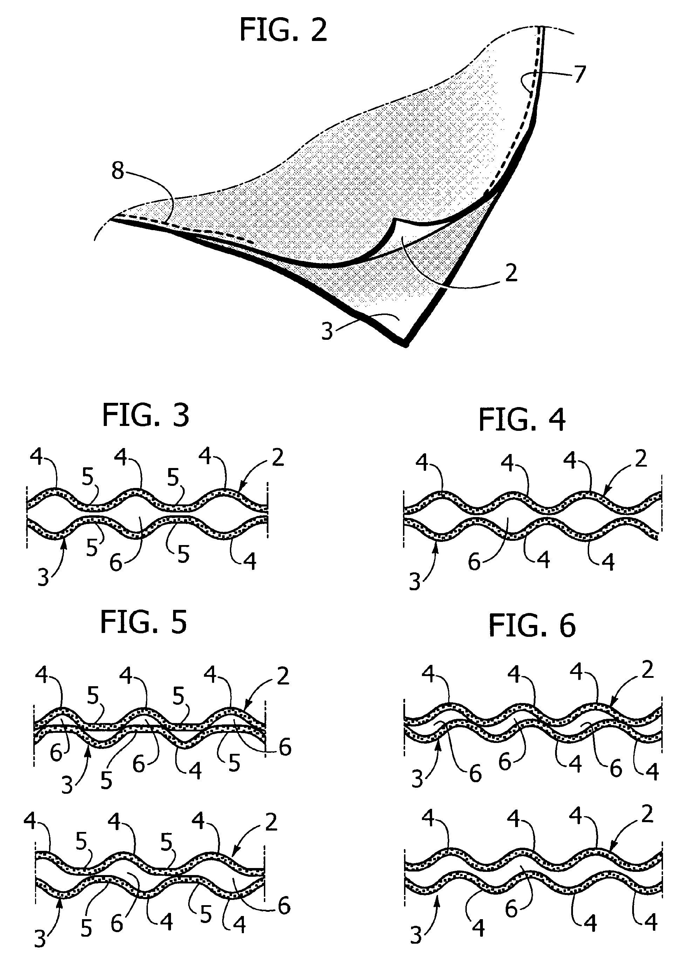

According to a characteristic of the invention, the main body of the bathrobe 1 is obtained using at least two layers or parts of microfibre non-woven fabric, designated by 2 and 3, superimposed on one another, as may be seen also in Figure 2.

According to another characteristic of the invention, the microfibre non-woven fabric that constitutes a respective part 2, 3 is embossed, i.e., it bears upon it a substantially regular and orderly series of reliefs, particularly in the form of small embossed portions. The practical modalities of provision of the embossing of the microfibre non-woven fabric are irrespective of the purposes of the present invention, it being possible for them to be of any known type.

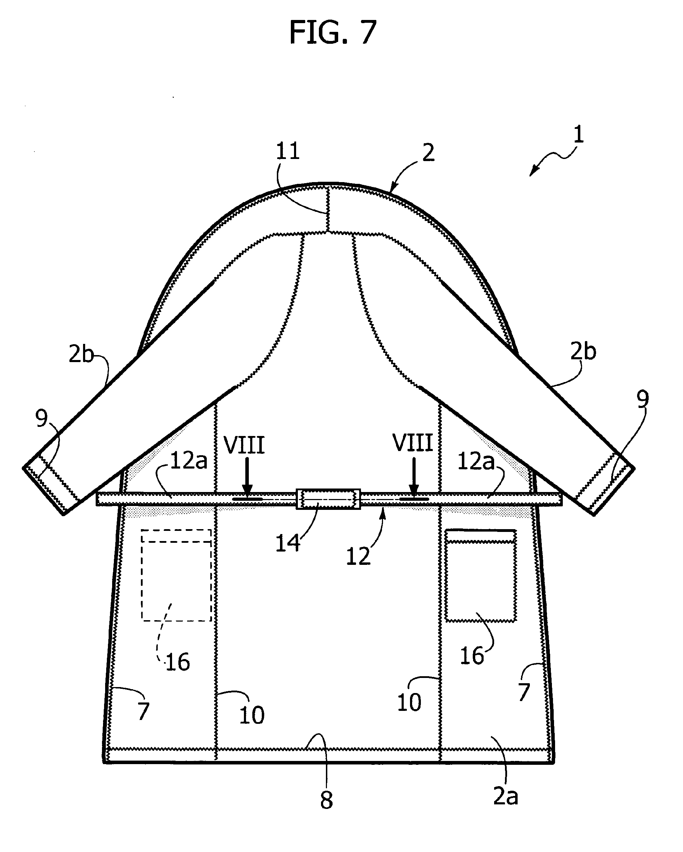

An example of embossing of the two parts 2 and 3 is schematically represented in Figure 2 and in Figure 3 (in Figure 1and in Figure 7 the embossing has not been represented for greater clarity of representation of the drawings). In the example represented in Figure 3, the non-woven fabric of the two parts 2 and 3 is embossed so as to present a basically regular series of parts in relief 4, referred to hereinafter as embossed portions, with respect to a general plane 5 of the fabric. Once again with reference to the example illustrated, the parts 2 and 3 are superimposed in such a way that the embossed portions 4 rise from the general planes 5 of the respective fabrics in opposite directions, but evidently possible is also a configuration of assembly of the parts reverse with respect to the one represented. Of course, other patterns of the embossing are possible, and a possible variant in this sense is represented in Figure 4.

In accordance to a further characteristic of the invention, the two parts 2, 3 of embossed microfibre non-woven fabric are superimposed on one another and joined together so as to present areas of superposition, in regions at which the parts themselves are free from mutual engagement in order to be able to define between one another volumes or pockets of air. This concept is represented schematically and at an enlarged scale in Figures 3 and 4, where reference number 6 designates precisely the aforesaid volumes or pockets of air. Obviously, the condition represented in Figures 3 and 4 must be understood as merely an example since, in the practical use of the bathrobe, and given that the two parts 2, 3 are completely free from mutual engagement in the aforesaid area of superposition, the parts themselves may set themselves in various ways with respect to one another, i.e., more or less set up against on one another. Figures 5 and 6 represent, in fact, possible alternative mutual positioning of the two parts 2, 3 in the case of embossing of the type as the ones illustrated in Figures 3 and 4, respectively.

As will emerge clearly hereinafter, the combination of the aforesaid characteristics of the invention enables important advantages to be achieved.

In the example of Figure 1, the bathrobe I has a main structure or body, which is obtained from a plurality of pieces of microfibre non-woven fabric, each layer or part 2, 3 being formed by a number of pieces. In the case of the bathrobe of Figure 1, for example, each part 2, 3 is formed by three pieces sewn together, namely, a main piece, which provides the back and the front flaps of the bathrobe, and two further pieces for making the sleeves. A type of embodiment of this sort, on the other hand, can be produced with different techniques, also starting from a different number of pieces. In addition, for the production of other bathroom textile articles - for example, a rectangular hand towel - the two superimposed parts can also be obtained by folding in two one and the same piece of microfibre non-woven fabric, the two parts being then sewn together along the three remaining edges to be joined.

The general shape of the part 2 may be seen in Figure 7. Designated by 2a and 2b are the aforesaid main pieces and sleeve pieces, which are cut from a respective piece of microfibre non-woven fabric so as to have the necessary peripheral profile, and are then sewn together according to techniques in themselves known in the sector. It should be noted that the longitudinal edges of each piece 2b are joined together by means of a respective stitching: these longitudinal stitchings of the sleeves extend basically starting from the armpit area as far as the cuff of the corresponding sleeve, and are hence not visible in Figure 7.

The part 3 has a shape that is practically the same as the one visible in Figure 7 and is obtained in the same way. On the other hand, in the preferred embodiment, the non-woven fabric constituting the part 2 has an aesthetic appearance different from that of the non-woven fabric constituting the part 3, for example, in terms of colouring.

Also the practical modalities of assembly in a superimposed condition of the two parts 2, 3 are irrespective of the purposes of the invention, and a currently known technique for creating so-called "double-face" garments can be used for said purpose. As regards what is of specific interest herein, the two parts 2 and 3 are superimposed on one another, once again in their respective sleeve portions, and are joined together along a plurality of joining regions extending longitudinally. The preferred technique for fixing the parts 2 and 3 locally on one another along the aforesaid regions is stitching, but it is possible to use for the purpose any other technique known in the sector. Some of the aforesaid joining regions are located in areas corresponding to or in the proximity of the peripheral edges of the bathrobe 1. In Figure 7, designated by 7, 8 and 9 are some stitchings made along the peripheral edges of the bathrobe. Preferably, the stitchings 7, 8 and 9 are continuous, even though at least some of them could be occasionally interrupted so as to leave intentionally a passage that sets the outside in communication with the gap defined between the parts 2 and 3.

In a preferred embodiment of the invention, the two parts of the textile article are moreover joined together also in localized regions intermediate with respect to the peripheral edges. In Figure 7, for said purpose, designated by 10 are two stitchings that extend longitudinally according to the height of the bathrobe 1, in a direction approximately parallel to a part of the side edges of the bathrobe, in the proximity of which respective stitchings 7 are provided. Another intermediate stitching, provided in the area of the neck of the bathrobe 1, is designated by 11. The intermediate stitchings 10, 11 can be continuous or else comprise stitching areas set at a distance apart from one another.

In a preferred embodiment, at least in a region corresponding to the peripheral stitchings 7 and/or 8, set between the two parts of microfibre non-woven fabric 2 and 3 is a further layer of material (not represented), for example, made of woven cloth, partially projecting on the outside, precisely in a region corresponding to the edges of the bathrobe 1, for substantially aesthetic purposes.

Irrespective of the practical stitching modalities, as may be readily understood, in the areas without stitchings 7-11, the two parts 2, 3 of microfibre non-woven fabric are free from mutual engagement so as to be able to define between them the volumes or pockets of air 6 illustrated schematically in Figures 3-6.

The non-woven fabric of at least one of the two parts 2 and 3, and in particular both of the parts, comprises microfibres selected from between polyester microfibres and polyamide microfibres. Preferably, both of the aforesaid types of microfibres are used, and, in the embodiment currently deemed preferential, the microfibres used consist exclusively of polyester microfibres and polyamide microfibres.

In general terms, the non-woven fabric of each part 2, 3 can comprise:
- from 20% to 80% dry weight of polyester microfibres, preferably from 40 to 70 wt%, and more preferably from 50 to 60 wt%, and/or
- from 20% to 80% dry weight of polyamide microfibres, preferably from 30 to 60 wt%, and more preferably from 40 to 50 wt%.

Once again in an embodiment at the moment preferred, the non-woven fabric of at least one of the two parts 2, 3, particularly of both of the parts, comprises an overall amount in dry weight of polyester microfibres that is greater than the overall amount of polyamide microfibres. In particular, it has been found that optimal characteristics in terms of lightness of the garment, comfort of use, and absorbing capacity is obtained with weight percentages of 50 to 60 wt% of polyester microfibres, in particular from 53 to 58 wt%, and from 40 to 50 wt% of polyamide microfibres, in particular from approximately 42 wt% to approximately 47 wt%. Preferably, moreover, the non-woven fabric constituting the two parts 2, 3, is of similar composition.

The microfibres used for producing the non-woven fabric of the parts or layers 2 and 3 preferably have a diameter of less than 10 micron, (indicatively less than 1 dtex).

The non-woven fabric constituting the two parts 2 and 3 moreover has a relatively small thickness as compared to the ones used according to the prior art in order to be lighter. Indicatively, the non-woven fabric made of polyester and polyamide microfibres according to the currently preferential version of the invention has a dry weight comprised between 65 and the 85 g/m², in particular approximately 75 g/m² (consider, for example, that the non-woven fabric used for the production of known single-layer microfibre bathrobes has a dry weight of approximately 100-110 g/m²).

As explained previously, according to the invention, the two parts 2 and 3 made of embossed microfibre non-woven fabric are superimposed on one another and joined together in such a way that, in the regions of superposition without stitchings, volumes or pockets of air are defined. This solution enables considerable advantages in terms of comfort and versatility of use of the bathrobe 1 to be achieved.

In the first place, the small thickness and the presence of the embossing makes it possible to bestow upon the non-woven fabric of the parts 2, 3 a pleasant feel and touch with the skin that is comparable to that of a traditional bathrobe made of toweling, with evident benefits in terms of comfort. In the second place, the presence of the embossing enables increase in the absorbing surface of each part 2, 3, given the same perimeter as compared to a non-embossed piece of non-woven fabric.

A further important functional advantage is linked to the presence of the aforesaid volumes or pockets of air, thanks to the presence of the embossing and of the areas of superposition in which the two parts 2 and 3 are completely free from mutual engagement. These volumes of air have the important function of constituting a sort of barrier that counters the transmission of moisture between the two layers of material, i.e., from the inner one, which has absorbed water following upon use, to the outer one. As mentioned previously, even in the case where the two parts 2 and 3 are constrained to one another also in intermediate positions, they can assume in use different positions with respect to one another (Figures 3-6). The presence of the embossing always ensures in any case the presence of volumes of air between the two parts, which are able to counter the transmission of moisture. In addition, when the bathrobe is worn, the movements of the user determine also relative movements between the two parts 2, 3, and also this has the effect of countering the transmission of moisture from one part to the other.

Also thanks to these characteristics, then, in the preferred embodiment, the body of the bathrobe 1 is configured for being turned inside out so that it can be worn in two opposite configurations. In this way, the bathrobe can be worn in a configuration for use for drying, and immediately after be turned inside out so as to be worn in the opposite configuration. The aforesaid volumes or pockets of air hence perform the function not only of hindering transfer of moisture from the layer that has absorbed the water to the dry layer, but also of thermal barrier, opposing transmission of heat from the dry part in contact with the user's body to the damp part of the bathrobe, now on the outside.

In a typical example of use, then, the bathrobe 1 can be worn after a bath, in the configuration of Figure 1 or Figure 7. As has been said, the presence of the embossing guarantees a sensation on the skin that is comparable to that of a bathrobe made of toweling. Thanks to the characteristics of high absorbing capacity guaranteed by the non-woven fabric made of polyester and polyamide microfibres, the part 3 of the bathrobe I dries the body of the user rapidly. At this point, the user can turn the bathrobe I inside out and put it back on in the second configuration, i.e., with the part 2 now to contact with the skin. The fact that the two parts 2, 3 have a different appearance, for example, in terms of colouring or also of different pattern of the embossing, makes it possible for the user to distinguish easily between the two parts.

The volumes of air and the free superposition between the parts 2 and 3 counter the transfer of moisture from the outside layer, which is damp, to the inside layer, which is dry, and at the same time opposes the dispersion of heat from the inside layer - in contact with the body - to the outside layer. The bathrobe can thus be worn in the second configuration for a relatively long period of time, and hence without the user having necessarily to put a dry garment on quickly.

When the bathrobe 1 is worn, the intermediate stitchings 10, 11 fulfil the function of preventing any excessive relative movement between the parts 2 and 3 in the areas in which these are superimposed without constraint so as to guarantee in any case a good wearability of the garment.

In the example illustrated, the bathrobe 1 further comprises a belt, designated as a whole by 12 in the figures. Also the belt 12 can be conveniently formed in a way similar to the main body of the bathrobe, i.e., with two respective parts of embossed non-woven fabric having a composition similar to that of the parts 2 and 3, joined together peripherally by means of stitching, in order to present areas of superposition in which the two parts are free from mutual engagement.

In a particularly advantageous embodiment in itself innovative, the belt 12 is constrained in a permanent way to the body of the bathrobe 1, but in any case can be used in both of the configurations of use of the bathrobe itself.

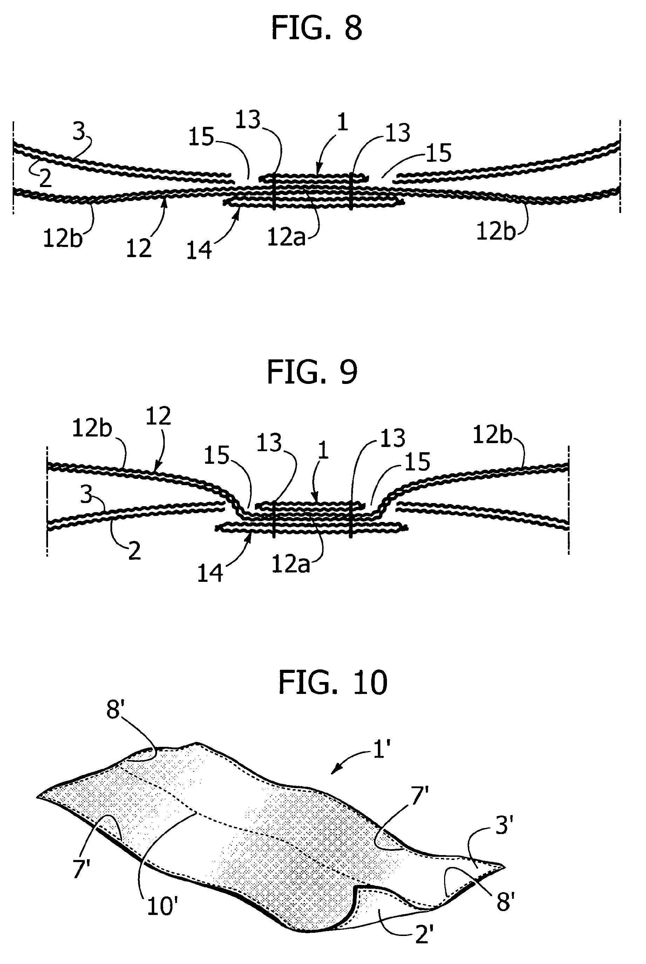

As may be seen in Figure 8, the belt 12 has an intermediate portion 12a, which is secured to the body of the bathrobe 1, in the dorsal region of the latter. For said purpose two stitchings can be provided, schematically designated by 13. In the example illustrated, moreover, the intermediate portion 12a of the belt 12 is set between the body of the bathrobe I and a small piece of cloth 14 (see also Figure 7). Also this piece 14 can be made in a way similar to the body of the bathrobe and to the belt.

In the dorsal region, the body of the bathrobe 1 has, at the sides of the intermediate portion 12a of the belt 12, two through openings 15, in the form of slits substantially parallel to one another and perpendicular to the longitudinal direction of the belt 12. As may be seen, each opening 15 is formed in the proximity of a respective longitudinal end of the intermediate portion 12a of the belt 12.

Figure 8 illustrates a configuration of the bathrobe 1 corresponding to that of Figures 1 and 7, i.e., in which the part 2 provides the outer layer of the bathrobe, and the part 3 its inner layer. As may be noted, in this condition, the portions 12b of the belt 12 face the part 2 to enable use of the belt itself in the first configuration of the bathrobe 1.

When, after use for drying, the bathrobe 1 is turned inside out by the user, as has been described above, to be worn in the second configuration, the two side parts of the belt 12b can be made to pass each through the respective opening 15, in order to face now the part 3, to enable use of the belt itself in the second configuration of the bathrobe 1. This condition is illustrated in Figure 9. Obviously, when the bathrobe is to be turned inside out again, it is sufficient to slide out the portions 12b of the belt through the openings 15.

As may be noted, the piece 14 enables, in the configuration of Figure 8, hiding of the openings 12b. Obviously, a piece similar to the one designated by 14 can be provided also on the opposite side (i.e., on the part 3). From Figures 8 and 9 it may moreover be noted how, in a possible variant, edge portions of the parts 2 and 3, in regions corresponding to the openings 15, are not sewn. This measure can be envisaged to set in communication the gap defined by the parts 2 and 3 with the outside, for example in order to allow change of air.

Once again with reference to the embodiment illustrated in the figures, sewn on each of the two parts 2 and 3 is a respective piece 16, in order to form a pocket: in this way, in both of the configurations of use, the bathrobe 1 has a pocket on the outside. Also the pieces 16 can be produced in a way similar to the body of the bathrobe and to the belt, i.e., formed by two respective parts of microfibre non-woven fabric.

The solution according to the invention can be used also for the production of other types of textile bathroom articles, whether they are to be worn or not. For example, the concept underlying the invention can be used to produce garments in the form of tunic or gowns, or once again for mittens of the type provided for drying one's body. Also these garments are advantageously configurable so that they can be turned inside out and hence worn in two opposite configurations. Obviously, the idea underlying the invention can likewise be used also for producing hand towels, bath towels and beach towels, towels in general and the like.

For example, Figure 10 is a schematic illustration of a hand towel, designated as a whole by 1', made according to the teachings of the invention. Like the bathrobe 1, also the hand towel 1' has a two-layer conformation; i.e., it is formed starting from two respective parts 2', 3' made of embossed microfibre non-woven fabric, in the preferred compositions indicated previously. Also in this embodiment, the two superimposed parts 2', 3' are joined together in the proximity or in a region corresponding to the respective peripheral edges, by means of stitching 7' and 8' so as to have areas of superposition in which the two layers or parts 2', 3' are without constraints in order to form volumes or pockets of air as described previously. Also in the example of embodiment of Figure 10, moreover, the hand towel 1' is provided with a stitching 10' intermediate between the two stitchings 7' in order to limit the possibilities of relative movement between the parts 2' and 3'. Obviously, the intermediate stitching 10', just as the intermediate stitchings of the bathrobe 1, may have an arrangement, development and length different from the one exemplified in the figure.

From the above description, the characteristics and advantages of the present invention emerge clearly. Practical tests conducted by the present applicant have made it possible to verify that the solution proposed enables the pre-set aims to be achieved effectively. In the case of production of bathrobes, the comfort and versatility of use of the articles described are considerably increased as compared to the prior art, moreover guaranteeing characteristics of absorption that are decidedly higher than in bathrobes made of toweling and ensuring at the same time an extremely low weight and volume as compared to said known bathrobes.

The same advantages are obtained also in relation to textile bathroom articles that are not to be worn, such as hand towels, bath towels, beach towels, and the like.

By way of example, the possibility is mentioned of providing, between the two parts 2, 3 or 2', 3', also a further layer of material, preferably thinner than the aforesaid parts, the presence of pockets of air being in any case ensured by the embossings of the microfibre non-woven fabric.

## Claims

1. A bathroom textile article, such as a bathrobe, a hand towel, a beach towel, comprising a first part made of microfibre non-woven fabric, **characterized in that**
- the microfibre non-woven fabric of the first part is embossed (2; 2'),
- the article (1; 1') comprises a second part made of embossed microfibre non-woven fabric (3; 3'),
- each of the first and the second parts of non-woven fabric (2, 3; 2'; 3') is embossed so as to present a basically regular series of portions in relief (4) with respect to a general plane (5) of the respective non-woven fabric,
- the first part of non-woven fabric (2, 3) and the second part of non-woven fabric (2', 3') are superimposed on one another and locally joined together so as to present areas of superposition at which the two parts of non-woven fabric (2, 3; 2', 3') are free from mutual engagement, and
- said areas of superimposition at which the two parts of non-woven fabric (2, 3; 2', 3') are free from mutual engagement comprises both the respective portions in relief (4) and the respective general plane (5) of the fabric.

2. The article according to Claim 1, **characterized in that** the non-woven fabric of at least one of the two parts (2, 3; 2', 3') comprises microfibres selected from between polyester microfibres and polyamide microfibers, preferably both polyester microfibres and polyamide microfibers, more preferably only polyester microfibres and polyamide microfibres.

3. The article according to Claim 2, **characterized in that** the non-woven fabric of at least one of the two parts (2, 3; 2', 3'), and preferably of both of the parts, comprises an overall amount in dry weight of polyester microfibres that is greater than the overall amount of polyamide microfibres.

4. The article according to Claim 2 or Claim 3, **characterized in that** said non-woven fabric comprises at least one of:
- from 20% to 80% dry weight of polyester microfibres, preferably from 40 wt% to 70 wt%, and more preferably from 50 wt% to 60 wt%;
- from 20% to 80% dry weight of polyamide microfibres, preferably from 30 wt% to 60 wt%, and more preferably from 40 wt% to 50 wt%.

5. The article according to Claims 4, **characterized in that** said non-woven fabric comprises from 50 wt% to 60 wt% of polyester microfibres and from 40 wt% to 50 wt% of polyamide microfibres.

6. The article according to Claim 1, **characterized in that** the non-woven fabric of at least one of the two parts (2, 3; 2', 3'), and preferably of both of the parts, has a dry weight of less than 100 g/m², in particular less than 80 g/m².

7. The article according to at least one of the preceding claims, **characterized in that** the non-woven fabric constituting the first part (2, 3) has a composition substantially the same as that of the non-woven fabric constituting the second part (2, 3; 2', 3').

8. The article according to Claim 1, **characterized in that** the first and second parts of non-woven fabric (2, 3; 2', 3') are locally joined together along longitudinally extended joining areas (7-11; 7', 8', 10').

9. The article according to Claim 8, **characterized in that** joining areas (7-9; 7-8') are provided in a region corresponding to or in the proximity of peripheral edges of the article (1; 1') and/or joining areas (10-11; 10') are provided in an intermediate position between peripheral edges of the article (1; 1').

10. The article according to at least one of Claims 1 to 9, **characterized in that** it is a hand towel, or a bath towel, or a bath towel, or the like (1').

11. The article according to at least one of Claims 1 to 9, **characterized in that** it is an article that can be worn (1), particularly a a bathrobe (1).

12. The article according to Claim 11, **characterized in that** it comprises a bathrobe body (1) configured for being turned inside out, i.e., so that it can be worn in two opposite configurations.

13. The article according to Claim 11 or Claim 12, **characterized in that** it comprises a belt (12) that is joined in a permanent way to the bathrobe body (1).

14. The article according to Claim 13, **characterized in that** the belt (12) has two longitudinal ends and at least one portion (12a) intermediate between said ends, which is joined in a permanent way to the bathrobe body (1) and the bathrobe body (1) has, in the proximity of said intermediate portion (12a), two through openings (15) set at a distance apart from one another, through which respective portions of the belt (12b) that are lateral to said intermediate portion (12a) can be slid in and out.

15. The article according to Claim 8 or Claim 9, **characterized in that** the first and second parts of non-woven fabric (2, 3; 2', 3') are joined to each at said joining areas (7-11; 7', 8', 10') by stitching.

## Patentansprüche

1. Badezimmertextilartikel, wie etwa ein Bademantel, ein Handtuch, oder ein Strandhandtuch, enthaltend einen ersten Teil, der aus einem Mikrofaser-Vliesstoff gefertigt ist, **dadurch gekennzeichnet, dass**
- der Mikrofaser-Vliesstoff des ersten Teils geprägt (2; 2') ist,
- der Artikel (1; 1') einen zweiten Teil enthält, der aus einem geprägten Mikrofaser-Vliesstoff (3; 3') gefertigt ist,
- jeweils der erste und der zweite Teil des Mikrofaser-Vliesstoffes (2, 3; 2'; 3') derart geprägt sind, dass sie eine im wesentlichen regelmäßige Abfolge von Abschnitten eines Reliefs (4) im Bezug auf eine allgemeine Ebene (5) des entsprechenden Vliesstoffes aufweisen,
- der erste Teil des Vliesstoffes (2, 3) und der zweite Teil des Vliesstoffes (2', 3') übereinandergelegt und lokal miteinander verbunden sind, um so Bereiche einer Überlagerung aufzuweisen, an denen die beiden Teile des Vliesstoffes (2, 3; 2', 3') frei von einem wechselseitigen Eingriff sind, und
- die Bereiche der Überlagerung, an denen die beiden Teile des Vliesstoffes (2, 3; 2', 3') frei von einem wechselseitigen Eingriff sind, sowohl die entsprechenden Abschnitte des Reliefs (4) als auch die entsprechende allgemeine Ebene (5) des Stoffes enthalten.

2. Artikel nach Anspruch 1, **dadurch gekennzeichnet, dass** der Vliesstoff wenigstens einer der beiden Teile (2, 3; 2', 3') Mikrofasern enthält, die zwischen Polyester-Mikrofasern und Polyamid-Mikrofasern, vorzugsweise sowohl aus Polyester-Mikrofasern als auch aus Polyamid-Mikrofasern und im besten Fall lediglich aus Polyester-Mikrofasern und Polyamid-Mikrofasern gewählt sind.

3. Artikel nach Anspruch 2, **dadurch gekennzeichnet, dass** der Vliesstoff wenigstens einer der beiden Teile (2, 3; 2', 3') und vorzugsweise beider Teile einen Trockengewichtsgesamtanteil von Polyester-Mikrofasern hat, der größer ist als der Gesamtanteil von Polyamid-Mikrofasern.

4. Artikel nach Anspruch 2 oder 3, **dadurch gekennzeichnet, dass** der Vliesstoff enthält:
- 20% bis 80% Trockengewicht Polyester-Mikrofasern, vorzugsweise 40 bis 70 Gew.-% und im besten Fall 50 bis 60 Gew.-% und/oder
- 20% bis 80% Trockengewicht Polyamid-Mikrofasern, vorzugsweise 30 bis 60 Gew.-% und im besten Fall 40 bis 50 Gew.-%.

5. Artikel nach Anspruch 4, **dadurch gekennzeichnet, dass** der Vliesstoff 50 bis 60 Gew.-% Polyester-Mikrofasern und 40 bis 50 Gew.-% Polyamid-Mikrofasern enthält.

6. Artikel nasch Anspruch 1, **dadurch gekennzeichnet, dass** der Vliesstoff wenigstens einer der beiden Teile (2, 3; 2', 3') und vorzugsweise beider Teile ein Trockengewicht von weniger als 100 g/m² und insbesondere weniger als 80 g/m² hat.

7. Artikel nach wenigstens einem der vorhergehenden Ansprüche, **dadurch gekennzeichnet, dass** der Vliesstoff, der den ersten Teil (2, 3) bildet, eine Zusammensetzung hat, die im wesentlichen dieselbe wie jene des Vliesstoffes ist, der den zweiten Teil (2, 3; 2', 3') bildet.

8. Artikel nach Anspruch 1, **dadurch gekennzeichnet, dass** der erste und der zweite Teil des Vliesstoffes (2, 3; 2', 3') entlang sich in Längsrichtung erstreckender Verbindungsbereiche (7 bis 11; 7', 8', 10') lokal verbunden sind.

9. Artikel nach Anspruch 8, **dadurch gekennzeichnet, dass** die Verbindungsbereiche (7 bis 9; 7 bis 8') in einem Bereich vorgesehen sind, der sich in der Nähe von Randkanten des Artikels (1; 1') befindet oder diesen entspricht, und/oder Verbindungsbereiche (10 bis 11; 10') in einer Zwischenposition zwischen Randkanten des Artikels (1; 1') vorgesehen sind.

10. Artikel nach wenigstens einem der Ansprüche 1 bis 9, **dadurch gekennzeichnet, dass** er ein Handtuch oder ein Badetuch oder ein Strandbadetuch oder dergleichen (1') ist.

11. Artikel nach einem der Ansprüche 1 bis 9, **dadurch gekennzeichnet, dass** es ein Artikel, der getragen werden kann (1), und insbesondere ein Bademantel (1) ist.

12. Artikel nach Anspruch 11, **dadurch gekennzeichnet, dass** er einen Bademantelkörper (1) enthält, der dazu eingerichtet ist, umgekehrt zu werden, d.h. derart, dass er in zwei unterschiedlichen Konfigurationen getragen werden kann.

13. Artikel nach Anspruch 11 oder 12, **dadurch gekennzeichnet, dass** er einen Gürtel (12) enthält, der dauerhaft mit dem Bademantelkörper (1) verbunden ist.

14. Artikel nach Anspruch 13, **dadurch gekennzeichnet, dass** der Gürtel (12) zwei Längsenden und wenigstens einen Abschnitt (12a) zwischen den Enden hat, der dauerhaft mit dem Bademantelkörper (1) verbunden ist, und der Bademantelkörper (1) in der Nähe des Zwischenabschnittes (12a) zwei Durchgangsöffnungen (15) aufweist, die in einem Abstand zueinander angeordnet sind und durch die entsprechende Abschnitte des Gürtels (12b), die sich seitlich an dem Zwischenabschnitt (12a) befinden, ein- und ausgefädelt werden können.

15. Artikel nach Anspruch 8 oder 9, **dadurch gekennzeichnet, dass** der erste und der zweite Teil des Vliesstoffes (2, 3; 2', 3') an den Verbindungsbereichen (7 bis 11; 7', 8', 10') durch Nähte miteinander verbunden sind.

## Revendications

1. Article textile de bain, tel qu'un peignoir, un essuie-main, une serviette de plage, comprenant une première partie constituée d'un tissu non tissé de microfibres, **caractérisé en ce que**
- le tissu non tissé de microfibres de la première partie est gaufré (2 ; 2'),
- l'article (1 ; 1') comprend une seconde partie de tissu non tissé de microfibres gaufré (3 ; 3'),
- chacune des première et seconde parties de tissu non tissé (2, 3 ; 2' ; 3') est gaufrée afin de présenter une série à la base régulière de portions en relief (4) par rapport à un plan général (5) du tissu non tissé respectif,
- la première partie de tissu non tissé (2, 3) et la seconde partie de tissu non tissé (2', 3') sont superposées l'une sur l'autre et jointes localement ensemble afin de présenter des zones de superposition sur lesquelles les deux parties de tissu non tissé (2, 3 ; 2', 3') sont exemptes d'une prise mutuelle, et
- lesdites surfaces de superposition sur lesquelles les deux parties de tissu non tissé (2, 3 ; 2', 3') sont exemptes d'une prise mutuelle comprennent à la fois les portions respectives en relief (4) et le plan général respectif (5) du tissu.

2. Article selon la revendication 1, **caractérisé en ce que** le tissu non tissé d'au moins une des deux parties (2, 3 ; 2', 3') comprend des microfibres choisies parmi des microfibres de polyester et des microfibres de polyamide, de préférence à la fois des microfibres de polyester et des microfibres de polyamide, encore mieux uniquement des microfibres de polyester et des microfibres de polyamide.

3. Article selon la revendication 2, **caractérisé en ce que** le tissu non tissé d'au moins une des deux parties (2, 3 ; 2', 3'), et de préférence des deux parties, comprend une quantité globale en masse sèche de microfibres de polyester qui est supérieure à la quantité globale des microfibres de polyamide.

4. Article selon la revendication 2 ou la revendication 3, **caractérisé en ce que** ledit tissu non tissé comprend au moins un parmi :
- de 20 % à 80 % en masse sèche de microfibres de polyester, de préférence de 40 % en masse à 70 % en masse, et encore mieux de 50 % en masse à 60 % en masse ;
- de 20 % à 80 % en masse sèche de microfibres de polyamide, de préférence de 30 % en masse à 60 % en masse, et encore mieux de 40 % à 50 % en masse.

5. Article selon la revendication 4, **caractérisé en ce que** ledit tissu non tissé comprend de 50 % en masse à 60 % en masse de microfibres de polyester et de 40 % en masse à 50 % en masse de microfibres de polyamide.

6. Article selon la revendication 1, **caractérisé en ce que** le tissu non tissé d'au moins une des deux parties (2, 3 ; 2', 3'), et de préférence des deux parties, présente une masse sèche inférieure à 100 g/m², en particulier inférieure à 80 g/m².

7. Article selon au moins l'une des revendications précédentes, **caractérisé en ce que** le tissu non tissé constituant la première partie (2, 3) présente une composition pratiquement identique à celle du tissu non tissé constituant la seconde partie (2, 3 ; 2', 3').

8. Article selon la revendication 1, **caractérisé en ce que** les première et seconde parties de tissu non tissé (2, 3 ; 2', 3') sont localement jointes ensemble le long de surfaces de jonction s'étendant longitudinalement (7-11 ; 7', 8', 10').

9. Article selon la revendication 8, **caractérisé en ce que** des surfaces de jonctions (7-9 ; 7-8') sont fournies dans une région correspondant aux, ou à proximité des bords périphériques de l'article (1 ; 1') et/ou des surfaces de jonction (10-11 ; 10') sont fournies dans une position intermédiaire entre les bords périphériques de l'article (1 ; 1').

10. Article selon au moins l'une des revendications 1 à 9, **caractérisé en ce qu'**il est un essuie-main, ou une serviette de bain, ou semblable (1').

11. Article selon au moins l'une des revendications 1 à 9, **caractérisé en ce qu'**il est un article qui peut être porté (1), particulièrement un peignoir (1).

12. Article selon la revendication 11, **caractérisé en ce qu'**il comprend un corps de peignoir (1) configuré pour être tourné de l'intérieur vers l'extérieur, c'est-à-dire de sorte qu'il peut être porté dans deux configurations opposées.

13. Article selon la revendication 11 ou la revendication 12, **caractérisé en ce qu'**il comprend une ceinture (12) qui est jointe de manière permanente au corps de peignoir (1).

14. Article selon la revendication 13, **caractérisé en ce que** la ceinture (12) présente deux extrémités longitudinales et au moins une partie intermédiaire (12a) entre lesdites extrémités, laquelle est jointe de manière permanente au corps de peignoir (1) et le corps de peignoir (1) présente, à proximité de ladite partie intermédiaire (12a), deux ouvertures de passage (15) fixées à distance l'une de l'autre, à travers lesquelles des parties respectives de la ceinture (12b) qui sont latérales à ladite partie intermédiaire (12a) peuvent entrer et sortir en coulissant.

15. Article selon la revendication 8 ou la revendication 9, **caractérisé en ce que** les première et seconde parties de tissu non tissé (2, 3 ; 2', 3') sont jointes l'une à l'autre sur lesdites surfaces de jonction (7-11 ; 7', 8', 10') par piqûre.
